# EUROPEAN PATENT APPLICATION

(11) **EP 1 100 012 A2**
(43) Date of publication of application: **16.05.2001**
(21) Application number: 00309639.3
(22) Date of filing: 01.11.2000
(51) Int. Cl.: G06F 9/44

(54) **A method and kit for assessing and improving internationalization readiness of a software product**

(30) Priority: 02.11.1999 US 432727
(71) Applicant: GENERAL ELECTRIC COMPANY, Schenectady, NY 12345 (US)
(72) Inventor: Vivier, Barbara Jean, Schenectady, New York 12309 (US); Barnett, Janet Arlie, Pattersonville, New York 12137 (US); Kornfein, Mark Mitchell, Latham, New York 12110 (US); Deitsch, Andrew Isac, Clifton Park, New York 12065 (US)
(74) Representative: Pedder, James Cuthbert

(57) **Abstract**

A method and kit for assessing and improving internationalization readiness of a predetermined software product selected for evaluation by a user is provided. The method allows for generating an electronic master scorecard listing data indicative of respective main categories of internationalization topics to be considered by the user. The master scorecard may list respective counts indicative of each opportunity that a defect may occur in the software product. The master scorecard may further list respective counts indicative of actual defects relative to each respective one of the listed main categories topics. A computing step allows for computing a statistical measurement indicative of the readiness of the software product relative to the main categories of topics listed in the master scorecard.

## Description

This invention generally relates to software products, and more specifically to a method and kit for assessing and improving internationalization and/or localization readiness of software being newly developed for deployment in many geopolitical regions or countries of the world as well as software that may have been originally designed to be used primarily in one country but is subsequently deployable in many countries.

As U.S.A-based computer hardware and software suppliers expand their respective markets to, for example, Europe and the Far East and other regions of the globe, they are generally required to modify the related operating system and applications software to accommodate the language, customs and culture of the individual target markets. Many of these companies now achieve a substantial portion of their total revenues from such markets.

As will be appreciated by those skilled in the art, internationalization and/or localization of software products may generally include some or all of the following topics: translating software messages, menus, documentation and packaging; changing the time, date, decimal and currency formats; changing comparison and sorting routines; changing character sets, input methods and keyboard layouts; changing displayable and printable fonts, and printing devices; modifying input and output software routines to display, enter and print diverse single and multi-byte character sets; accommodating local laws and customs; translation of the software documentation into the new language; translation of the textual messages embedded in the software into the new language; incorporation of additional software facilities to make input and output of the new language and perhaps new characters possible; adapting the software to accommodate the customs and conventions of the new locale; and testing and assurance that the modified product works as intended.

Additionally, different cultures and countries have different rules for punctuation, word order, sorting, the order of items in addresses, currency measures and conversions, number formats and other local idiosyncrasies. Some Far Eastern countries have alphabets that include many thousands of characters (requiring multiple bytes of data to represent a single character) whereas the ASCII character set used in the United States generally contains less than 256 characters (which can be readily accommodated by a single 8 bit byte). Many native languages and customs have different meanings for certain symbols used as computer icons as well as colors which may be used to indicate some special meaning or have general cultural significance. For example, the color white in the U.S.A. generally represents purity or virtue, and in Japan the color white represents death while in Egypt that same color represents joy.

Although some progress has been made in designing and writing computer software to make the process of "localizing" a product somewhat easier by the use of tools that may utilize special data bases of internal messages instead of embedding them at various places in the code, by establishing special resource files to specify formats for time, currency, numbers, units of measure, etc., and generally providing interfaces that may be modified dynamically to change from one environment to another, unfortunately such tools generally suffer from various limitations since they do not address fundamental design techniques or strategies that a user could systematically employ at the outset prior to designing and producing the software so that the software can be easily adapted to the local markets without having to substantially rewrite the code or without having to depend on such tools, which as suggested above, may only be partly effective particularly, if the product was not appropriately designed at the outset to handle multi-country deployment. This aspect of prospectively addressing the adaptability and translatability of any given software product while the product is being developed is generally defined as "Internationalization." Unfortunately, prior to the present invention, users have not been able to have access to any systematic methodologies that address fundamental strategies related to internationalization issues or design kits that would allow the user to assess and improve the Internationalization of the product prior to the code being written, or for quickly correcting defects that may exist in a developed software product.

Since the basic internationalization process, in general, may be extremely complex and time consuming, and usually requires specialized design personnel with substantial training, it would be desirable to provide a method and kit that would allow efficient use of the time and resources used by the designer while developing a software product that will be deployed in multiple countries. In addition it would be desirable to provide a user-friendly method and kit to aid the designer to develop and assess the readiness of the product, that is, a method and kit that are relatively uncomplicated to use and that allows the designer to prospectively and systematically address the various topics required to make the software product adaptable and translatable to various locales or regions. In the event the software product is already partly or completely developed, it would be further desirable to allow the designer to be able to locate internationalization faults so as to quickly correct such faults prior to the product being deployed in the various countries or regions. It would also be desirable to be able to statistically quantify the degree of readiness of the software product relative to the internationalization and/or localization topics that should be addressed in order to make the product easily and economically adaptable and translatable to the various regions where the product is to be deployed. Of course, the more internationalization readiness a given product has, then it is likely that the localization process will be substantially more efficient both from the point of view of monetary expenditures and speed of deployment.

Generally speaking, the present invention fulfills the foregoing needs by providing a method for assessing and improving internationalization readiness of a predetermined software product selected for evaluation by a user. The method allows for generating an electronic master scorecard listing data indicative of respective main categories of internationalization topics to be considered by the user. The master scorecard includes a first data field configured for listing respective counts indicative of each opportunity that a defect may occur in the software product relative to each respective one of the listed main categories of internationalization topics. The master scorecard also includes a second data field configured for listing respective counts indicative of actual defects relative to each respective one of the listed main categories of internationalization topics. A computing step allows for computing, based on the respective counts listed on the first and second data fields of the master scorecard for each main category of internationalization topics, a predetermined statistical measurement indicative of the internationalization readiness of the software product relative to the main categories of internationalization topics listed in the master scorecard.

The present invention further fulfills the foregoing needs by providing a computerized kit for assessing and improving internationalization readiness of a predetermined software product selected for evaluation by a user. The kit is made up of a scorecard module for generating an electronic master scorecard listing data indicative of respective main categories of internationalization topics to be considered by the user. The master scorecard includes a first data field configured for listing respective counts indicative of each opportunity that a defect may occur in the software product relative to each respective one of the listed main categories of internationalization topics. The master scorecard includes a second data field configured for listing respective counts indicative of actual defects relative to each respective one of the listed main categories of internationalization topics. A computing module is coupled to the scorecard module for computing, based on the respective counts listed on the first and second datafields of the master scorecard for each main category of internationalization topics, a predetermined statistical measurement indicative of the internationalization readiness of the software product relative to the main categories of internationalization topics listed in the master scorecard.

The invention will now be described in greater detail, by way of example, with reference to the drawings, in which:

The features and advantages of the present invention will become apparent from the following detailed description of the invention when read with the accompanying drawings in which:
Fig. 1 illustrates a compilation of exemplary display screens including a master scorecard and a plurality of subordinate scorecards used for implementing the method of the present invention.
Figs. 2A and 2B jointly illustrate a subordinate scorecard for checking compliance related to text formatting.
Fig. 3 illustrates a subordinate scorecard for checking compliance related to local conventions.
Fig. 4 illustrates a subordinate scorecard for checking compliance related to number formatting.
Fig. 5 illustrates a subordinate scorecard for checking compliance related to display of measurements.
Fig. 6 illustrates a subordinate scorecard for checking compliance related to display of times and dates.
Fig. 7 illustrates a subordinate scorecard for checking compliance related to non-textual items, such as graphics or icons.
Fig. 8 illustrates a subordinate scorecard for checking compliance related to input of text.
Fig. 9 illustrates a subordinate scorecard for checking compliance related to bi-directional entry of text.
Fig. 10 illustrates an exemplary display screen listing data configured to assist the user while using the scorecard for assessing the software product.
Fig. 11 illustrates a display screen for prompting the user to identify characteristics of the software product which is being assessed.
Fig. 12 shows a simplified block diagram of a computer system that may used for executing the method and/or generating the kit of the present invention.

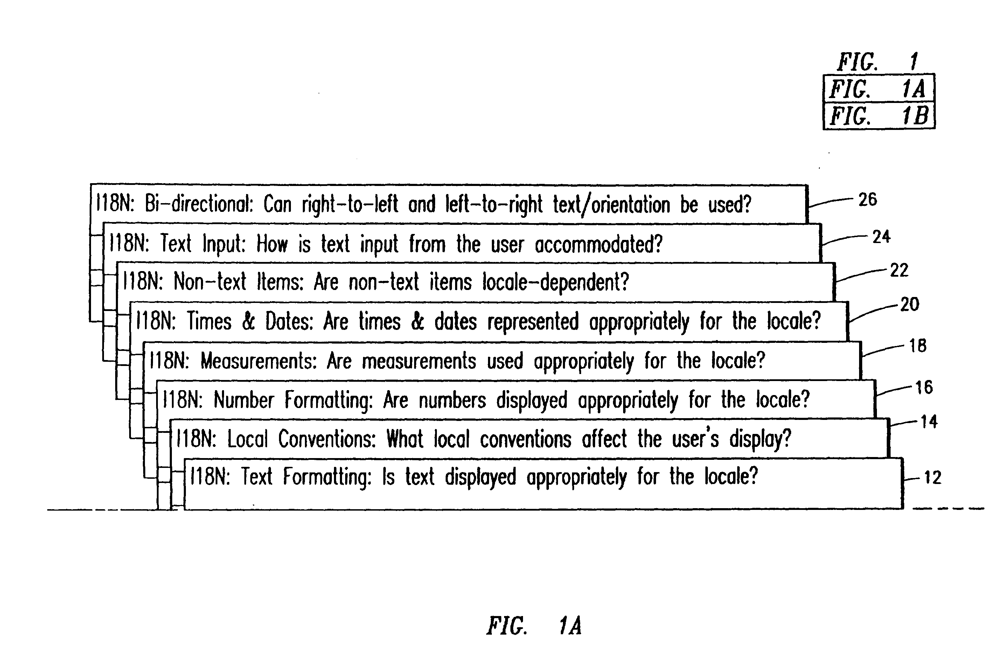

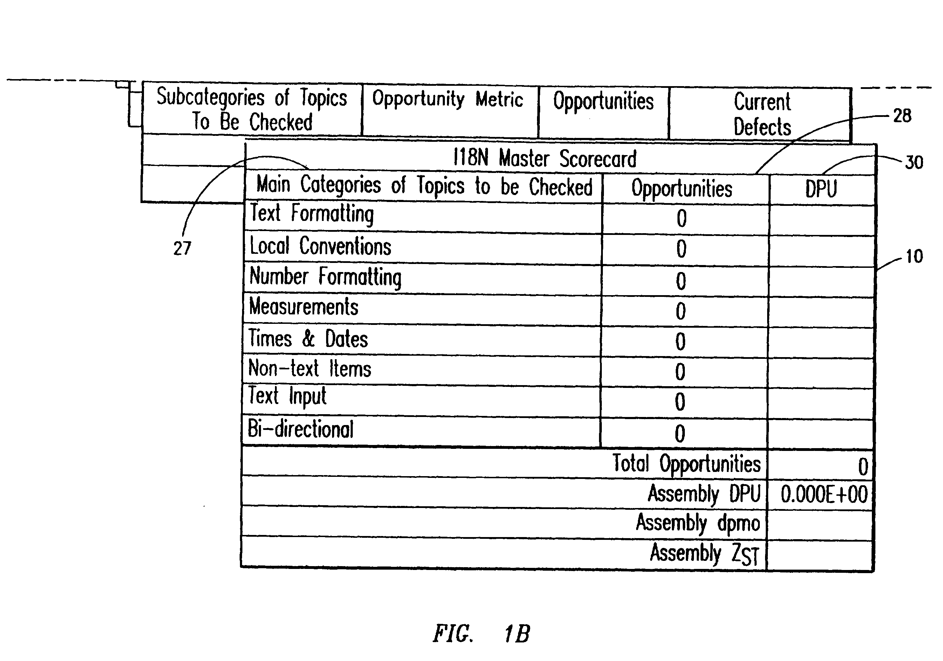

Fig. 1 illustrates a compilation of exemplary display screens that may be conveniently displayed in a suitable display unit. The screen displays include a master or a top level scorecard 10 and a plurality of subordinate scorecards (12, 14 . . . 24 and 26) used for implementing the method of the present invention, that is, a method for assessing and improving internationalization (I18N) readiness of a predetermined software product selected for evaluation by a user. As shown in Fig. 1, master scorecard 10 summarizes data indicative of respective main categories of I18N topics to be considered by the user. By way of example and not of limitation, the main categories of I18N topics to be considered by the user, as listed in master scorecard 10 in a data column 27, include text formatting, local conventions, number formatting, measurements, times and dates, non-text items, and text input including bi-directional text input. Master scorecard 10 further includes a first data field 28 configured for totaling respective counts indicative of each opportunity that a defect may occur in the software product relative to each respective one of the listed main categories of I18N topics. Master scorecard 10 further includes a second data field 30 configured for summarizing respective counts indicative of actual defects relative to each of the listed main categories of I18N topics. In a preferred embodiment of the present invention, the respective count values displayed in the master scorecard and the statistical measurement displayed therein is the combination of the individual counts for each of the individual subordinate scorecards and the combination of the respective statistical measurements for each individual scorecard. Thus, master scorecard 10 is automatically completed as the subordinate scorecards are completed and master scorecard 10 effectively summarizes the respective data details individually collected at each of the subordinate scorecards 12, 14 . . . 24 and 26.

As will be appreciated by those skilled in the art, a commercially available programmable processing tool, such as a Microsoft Excel spreadsheet and the like, may allow for computing, based on the respective counts summarized on the first and second data fields of the master scorecard for each main category of I18N topics, a predetermined statistical measurement Zₛₜ indicative of the I18N readiness of the software product relative to the main categories of I18N topics listed in the master scorecard. By way of example, the statistical measurement may be a standard deviation, mean, or other suitable statistical measurement based on the counts listed on the first and second data fields of the master scorecard. The statistical measurements could conveniently indicate how many standard deviations a given count is from its mean as may be readily determined by techniques well understood in the art. As suggested above, the results listed on the master scorecard may conveniently summarize or combine the respective statistical measurements obtained for each subordinate scorecard.

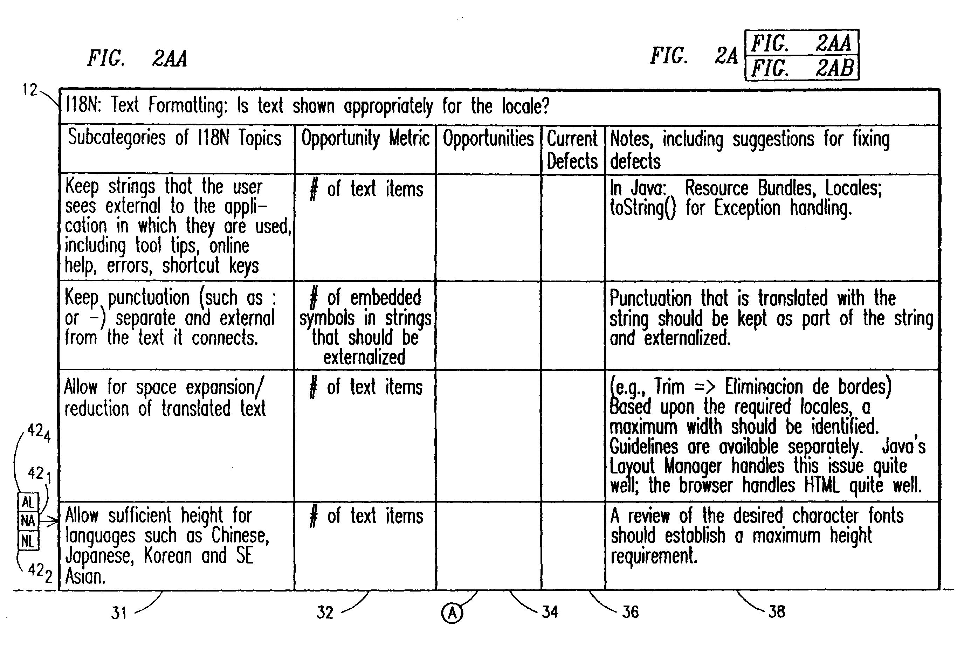

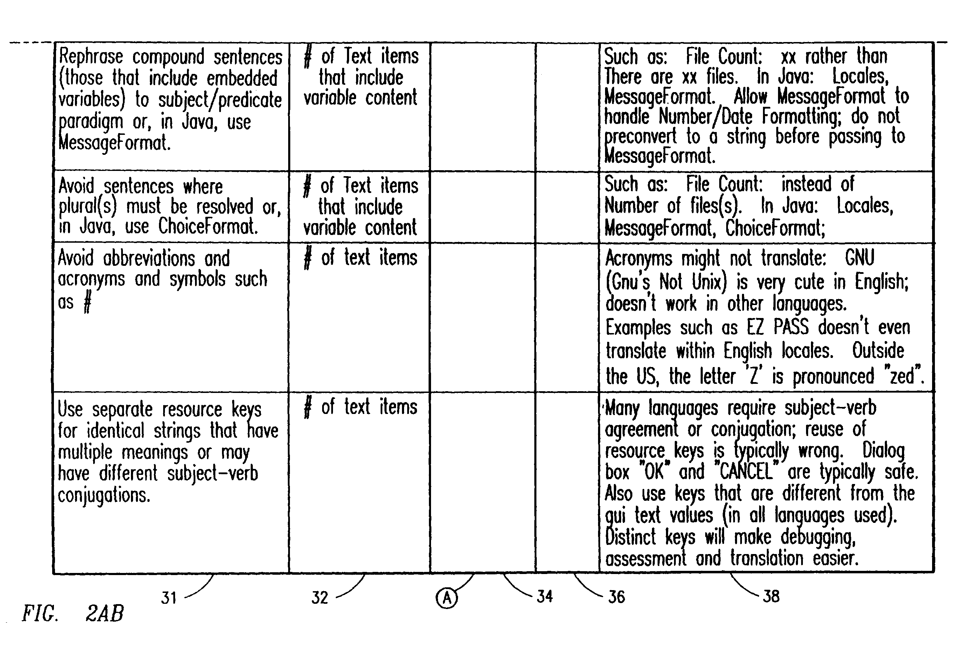

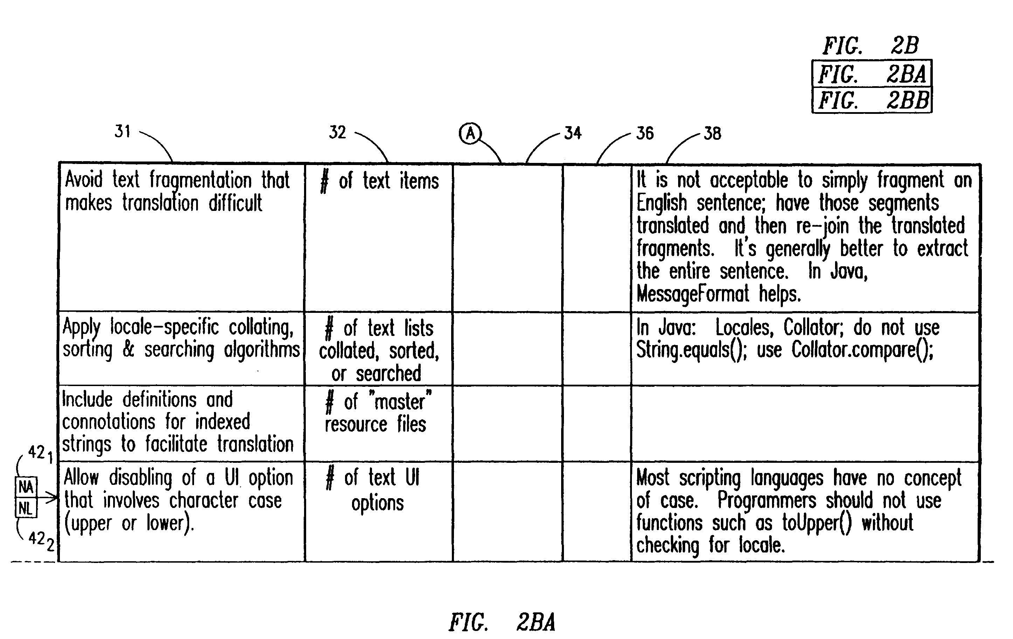

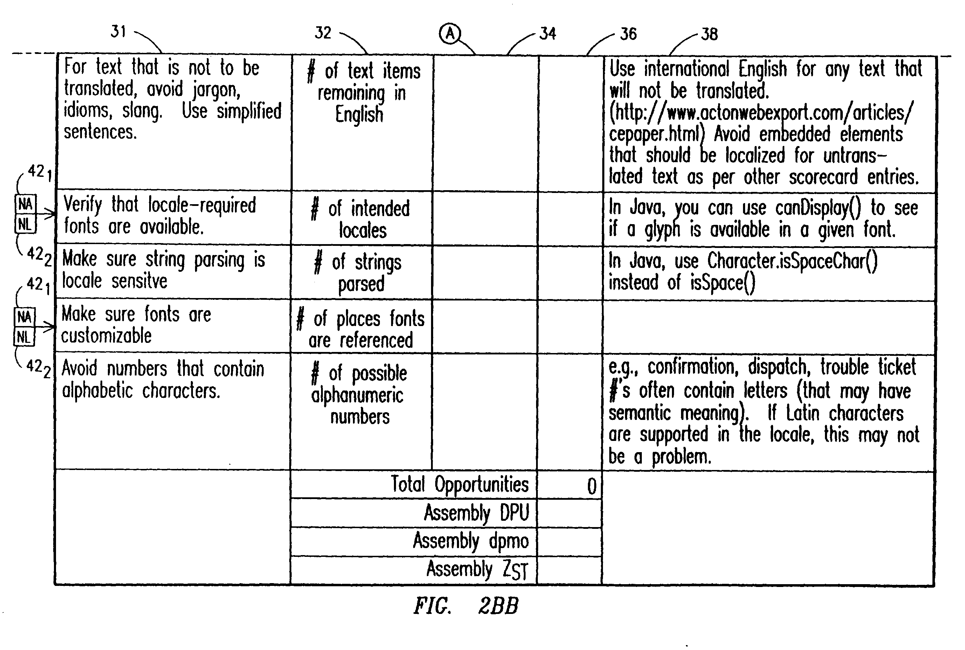

Figs. 2A and 2B jointly illustrate subordinate scorecard 12 for allowing the user to systematically check for I18N compliance in the software product relative to text formatting. As seen in Figs. 2A and 2B, subordinate scorecard 12 lists in a data column 31 data indicative of respective subcategories of I18N topics to be considered or checked by the user while conducting the evaluation or assessment of the software product. By way of example and not of limitation, subcategories of I18N topics listed in subordinate card 12 include the following:
(a) keeping strings that the user sees external to the application in which they are used, including tool tips, online help, errors, shortcut keys;
(b) keeping punctuation (such as ":" or "-" ) separate and external from the text it connects;
(c) allowing for space expansion/reduction of translated text;
(d) allowing sufficient height for languages such as Chinese, Japanese, Korean and SE Asian;
(e) rephrasing compound sentences ( such as those that include embedded variables) to subject/predicate paradigm or, in Java, use MessageFormat;
(f) avoiding sentences where plural(s) must be resolved or, in Java, use ChoiceFormat class;
(g) avoiding abbreviations and acronyms and symbols such as #, and the like;
(h) using separate resource keys for identical strings that have multiple meanings or may have different subject-verb conjugations;
(i) avoiding text fragmentation that makes translation difficult;
(j) applying locale-specific collating, sorting & searching algorithms;
(k) including definitions and connotations for indexed strings to facilitate translation;
(l) allowing for disabling of a UI option that involves character case (e.g., upper or lower);
(m) for text that is not to be translated, avoiding jargon, idioms, slang and using simplified sentences;
(n) verifying that locale-required fonts are available;
(o) making sure string parsing is locale sensitive;
(p) making sure fonts are customizable; and
(q) avoiding numbers that contain alphabetic characters.

As further seen in Figs. 2A and 2B data column 32 lists, where appropriate, data indicative of suggested metrics for counting respective defect opportunities that may occur relative to each respective subcategory of topics. For example, for the subcategory that addresses "keeping strings that the user sees external to the application in which they are used, including tool tips, online help, errors, shortcut keys", a suggested metric is counting the number of text items in the code of the software product or displayed by the software product. Similar to master scorecard 10, subordinate scorecard 12 includes a first data field 34 configured for listing respective counts indicative of each opportunity that a defect may occur in the software product relative to the respective subcategories of I18N topics. Thus, if there are 100 text strings locations that are displayed by the software product, then there would be at least 100 opportunities of possible defects in connection with such text locations and, assuming no other text formatting issues are present, then the count in the data field 34 corresponding to the text formatting category would be 100. Subordinate scorecard 12 also has a second data field 36 configured for listing respective counts indicative of actual defects relative to each respective subcategory topic. For example, if, out of the 100 text strings locations, there are two locations that actually contain an I18N defect, then the count in data field 36 corresponding to the text formatting category would be two. It will be appreciated that while in the subordinate scorecard, these opportunity and defect fields are filled in by the user, on the master scorecard, the similar fields axe automatically compiled from the subordinate scorecards. Subordinate scorecard 12 further includes a column of data 38 that lists respective suggestions for avoiding and/or removing defects relative to each respective subcategory topic. It will be appreciated that the suggestions may be specific to a respective computer language used to develop a given software product, and does allow the user for conveniently avoiding and/or removing defects relative to each respective subcategory topic. By way of example and not a limitation, the specific suggestions listed in column 38 presume that the programming language used by the designer is the Java computer language; however, it should be appreciated that the specific suggestions could be adapted to any other computer language used by the designer for a given software product. As suggested above, the programmable processing tool, such as a Microsoft Excel spreadsheet and the like, may allow for computing, based on the respective counts listed on the first and second data fields of the subordinate scorecard for each main category of I18N topics, the predetermined statistical measurement indicative of the I18N readiness of the software product relative to the subcategories of I18N topics listed in the subordinate scorecard.

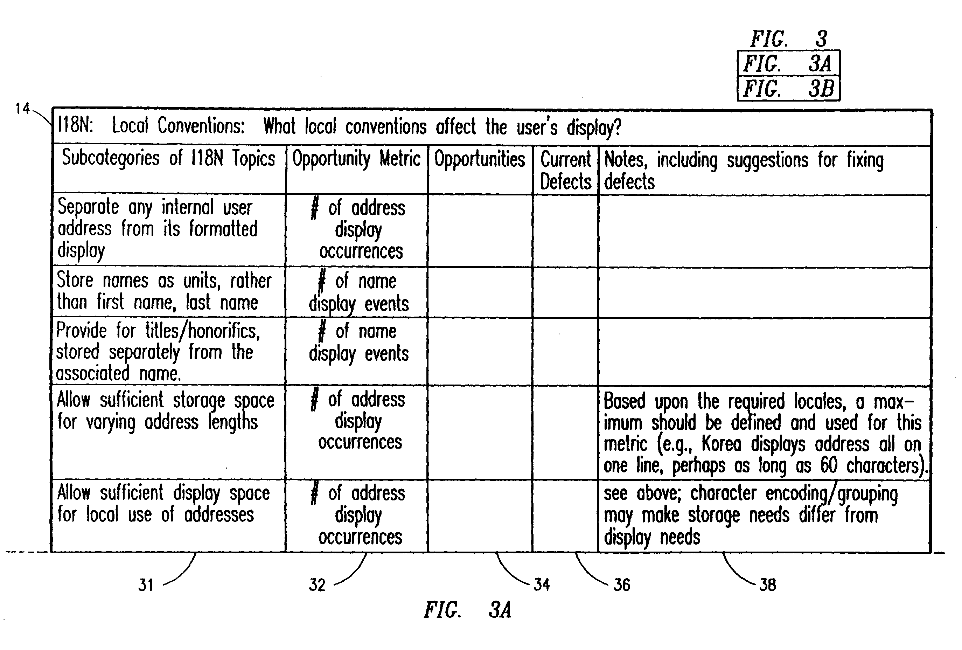

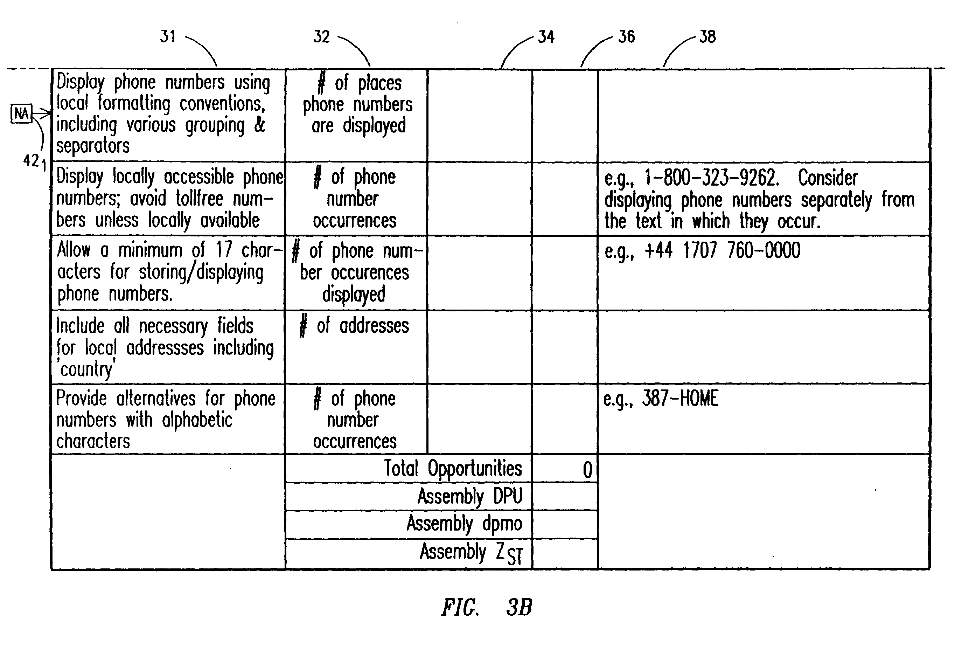

Fig. 3 illustrates subordinate scorecard 14 which is used for checking I18N compliance related to local conventions. By way of example, the list of subcategories of I18N topics listed in subordinate scorecard 14 include the following:
(a) separating any internal user address from its formatted display;
(b) storing names as units, rather than first name, last name;
(c) providing for titles/honorifics, stored separately from the associated name;
(d) allowing sufficient storage space for varying address lengths;
(e) allowing sufficient display space for local use of addresses;
(f) displaying phone numbers using local formatting conventions, including various grouping and separators;
(g) displaying locally accessible phone numbers; avoiding toll-free numbers unless locally available;
(h) allowing a minimum of 17 characters for storing/displaying phone numbers;
(i) including all necessary fields for local addresses including 'country'; and
(j) providing alternatives for phone numbers with alphabetic characters.

Similar to the subordinate scorecard discussed in the context of Fig. 2, subordinate scorecard 14 also has a column of data 32 for listing suggested metrics for counting respective defect opportunities that may occur relative to each respective subcategory of topics listed in subordinate scorecard 14. Also subordinate scorecard 14 has a first data field 34 configured for listing respective counts indicative of each opportunity that a defect may occur in the software product relative to the respective subcategories of I18N topics listed in subordinate scorecard 14. In addition, subordinate scorecard 14 has a second data field 36 configured for listing respective counts indicative of actual defects for the respective subcategories of the topics listed in subordinate scorecard 14. Also a column of data 38 allows for listing suggestions for fixing the defects relative to each respective subcategory topic.

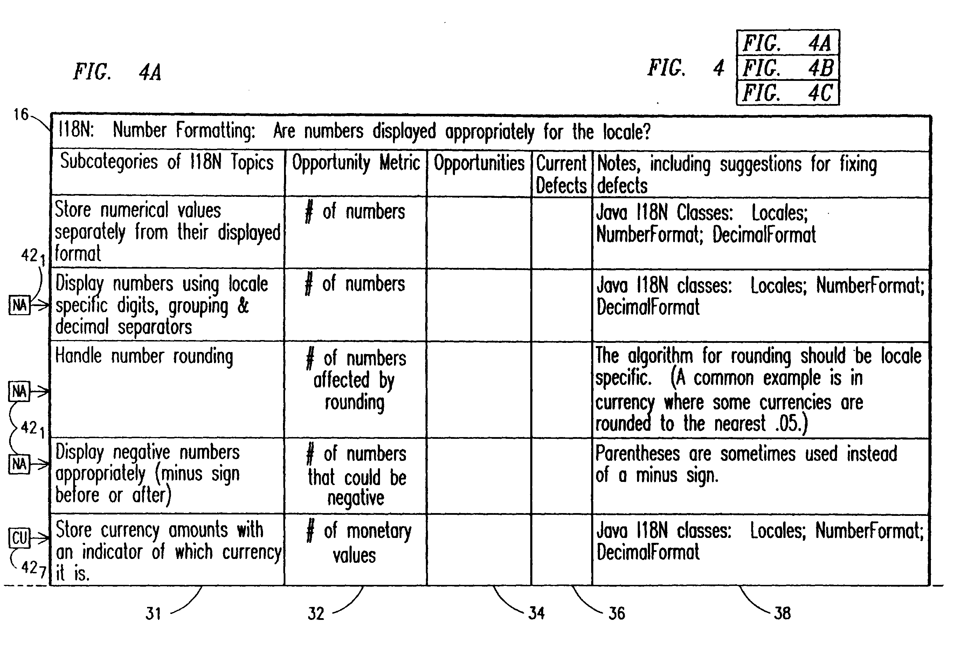

Fig. 4 illustrates a subordinate scorecard 16 for checking I18N compliance of the software product related to number formatting. In this case, the subcategories of I18N topics to be checked by the user include the following:
(a) storing numerical values separately from their displayed format;
(b) displaying numbers using locale specific digits, grouping and decimal separators;
(c) handling number rounding;
(d) displaying negative numbers appropriately (minus sign before or after);
(e) storing currency amounts with an indicator of the actual currency;
(f) displaying currency with the appropriate currency symbol in the correct position, and the value displayed being locale-specific;
(g) allowing for multiple character currency symbols; displaying percentages using the appropriate percent symbol in the correct position;
(i) in Java language, verifying that the numeric formatter is supported in the applicable locale;
(j) making sure number parsing is locale sensitive; and
(k) avoiding use of inappropriate numbers in examples.

Column 32 lists data indicative of suggested metrics for counting respective defect opportunities that may occur relative to each respect subcategory of I18N topics listed in subordinate scorecard 16. In addition, subordinate scorecard 16 also has first and second data fields for inserting counts as described in the context of Figs. 2 and 3. Subordinate scorecard 16 has a data column for listing suggestions to the designer for fixing defects as described in connection with the scorecards discussed in the context of Figs. 2 and 3.

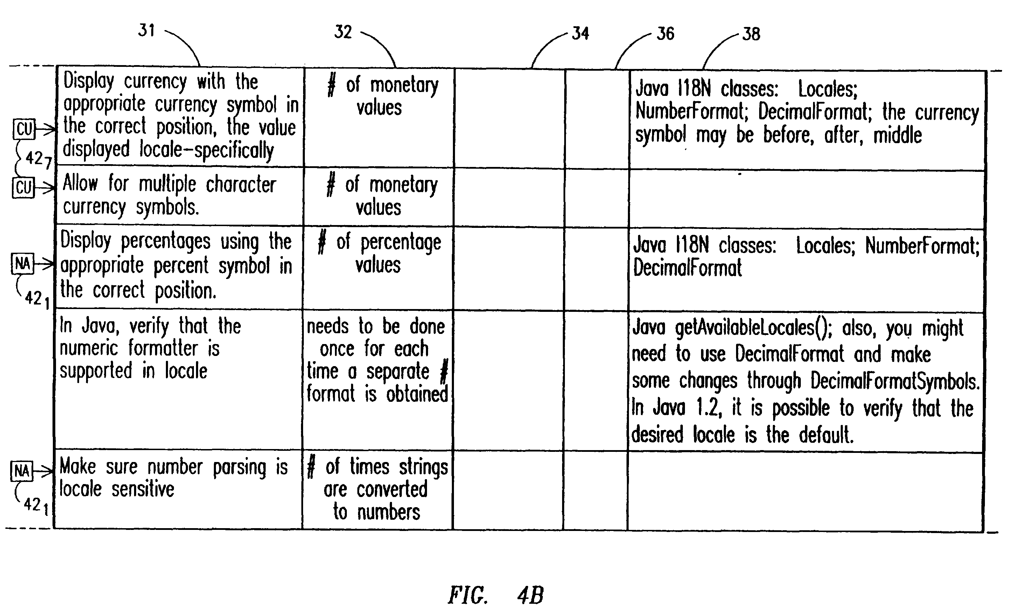

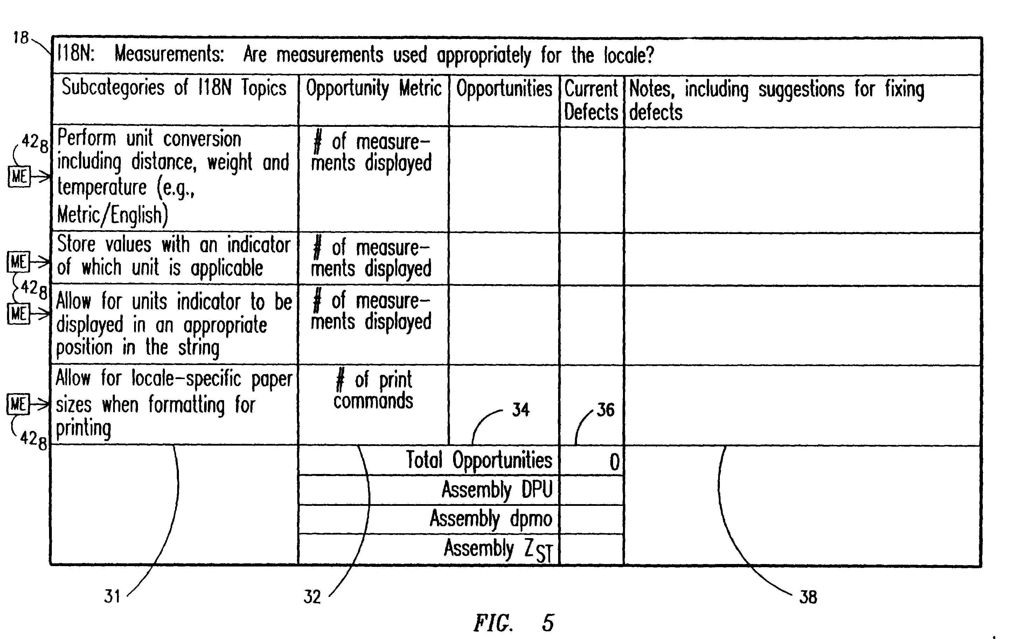

Fig. 5 illustrates subordinate scorecard 18 for checking compliance related to display of measurements. In this case, the list of subcategories of I18N topics include the following:
(a) performing unit conversion including distance, weight and temperature (e.g., Metric/English);
(b) storing values with an indicator of which unit is applicable;
(c) allowing for units indicator to be displayed in an appropriate position in the string; and
(d) allowing for locale-specific paper sizes when formatting for printing.

For the sake of simplicity of description, and since the formatting of each subordinate scorecard is essentially the same as described in the context of Figs. 2 through 4, such formatting will not be repeated once again.

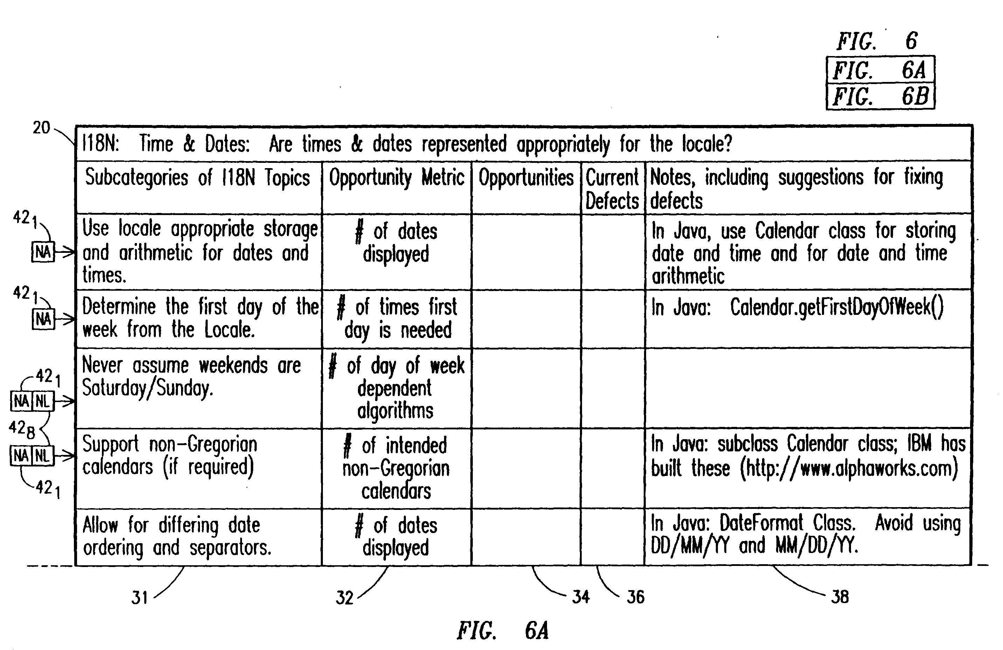

Fig. 6 illustrates a subordinate scorecard 20 for checking compliance related to display of times and dates. By way of example, the listed subcategories of I18N topics to be checked by the user include the following:
(a) using locale appropriate storage and arithmetic for dates and times;
(b) determining the first day of the week from the Locale;
(c) not assuming weekends are Saturday/Sunday;
(d) supporting non-Gregorian calendars (if required);
(e) allowing for differing date ordering and separators;
(f) allowing for different time representations; and
(g) in Java language, verifying DateFormat formatter is supported in locale.

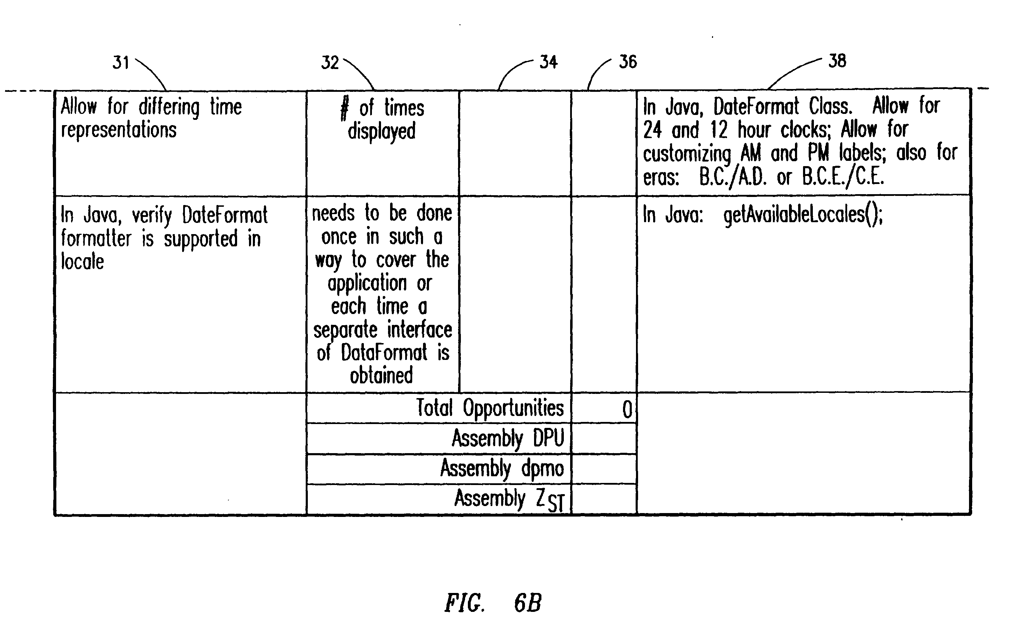

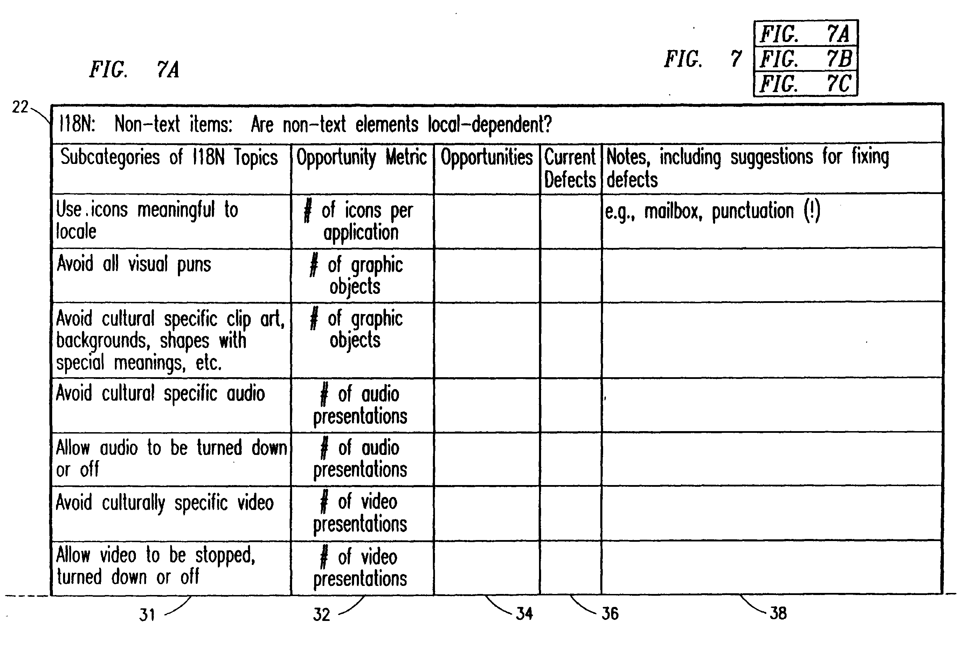

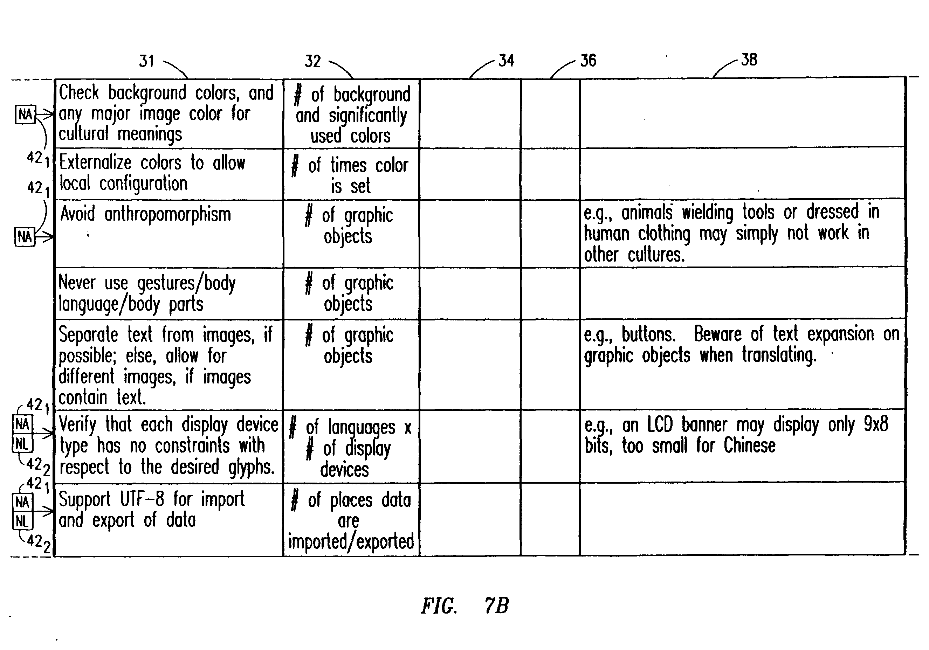

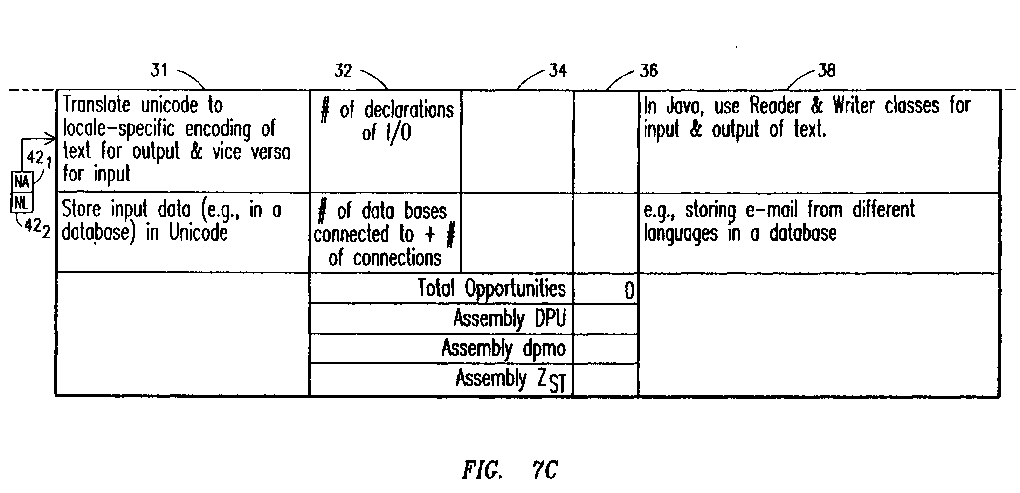

Fig. 7 illustrates subordinate scorecard 22 for checking compliance related to non-textual items, such as graphics or icons. By way of example, the list of subcategories of I18N topics to be checked by the user include the following:
(a) using icons meaningful to locale;
(b) avoiding all visual puns;
(c) avoiding cultural specific clip art, backgrounds, shapes with special meanings, etc.;
(d) avoiding culturally specific audio;
(e) allowing audio to be turned down or off;
(f) avoiding culturally specific video;
(g) allowing video to be stopped, turned down or off;
(h) checking background colors, and any major image color for cultural meanings;
(i) externalizing colors to allow local configuration;
(j) avoiding anthropomorphism;
(k) not using gestures/body language/body parts;
(l) separating text from images, if possible; else, allow for different images, if images contain text;
(m) verifying that each display device type has no constraints with respect to the desired glyphs;
(n) supporting UTF-8 for import and export of data;
(o) translating unicode to locale-specific encoding of text for output & vice versa for input; and
(p) storing input data (e.g., in a database) in Unicode.

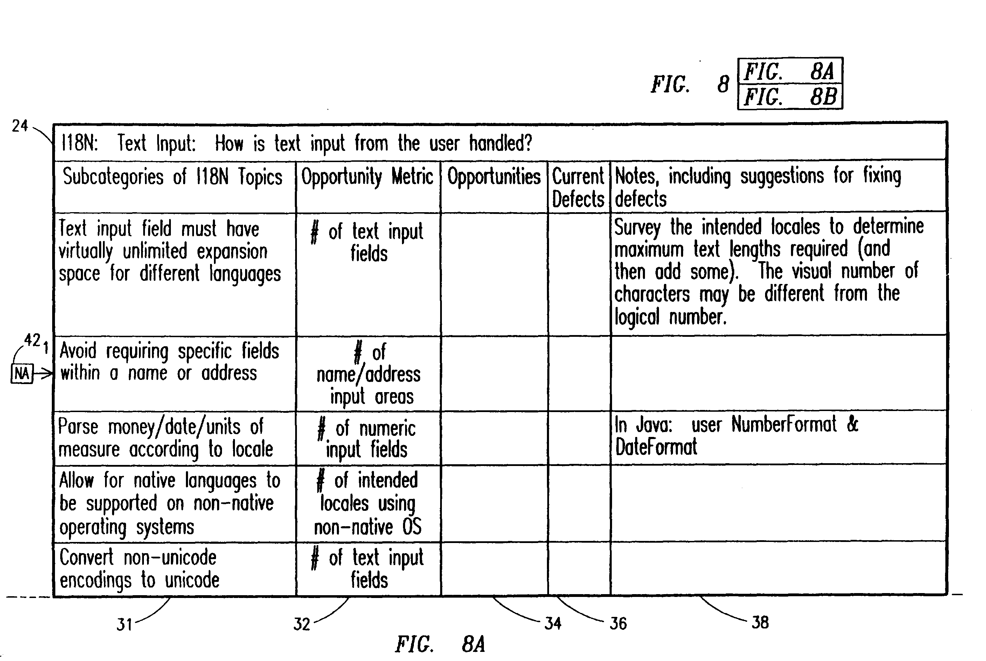

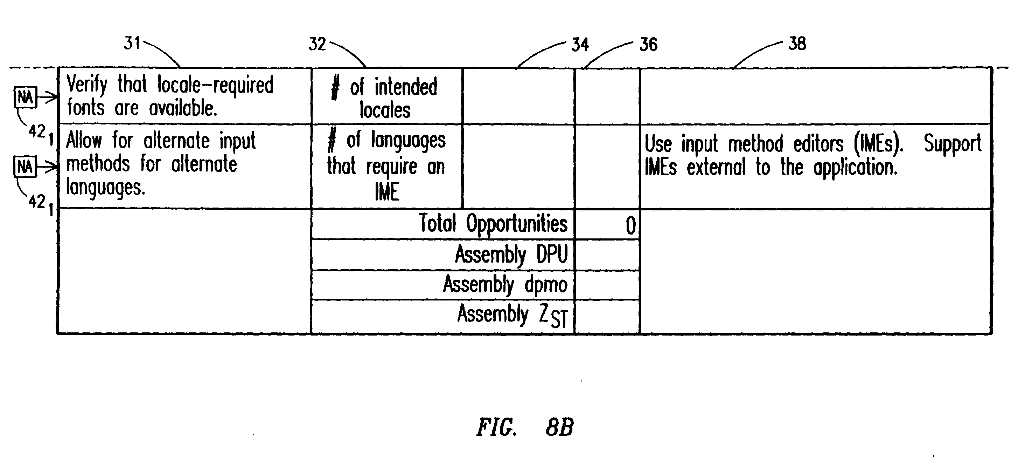

Fig. 8 illustrates a subordinate scorecard 24 for checking compliance related to entry of text into the software product. The list of subcategories of I18N topics to be checked by the user include the following:
(a) ensuring each text input field has virtually unlimited expansion space for different languages;
(b) avoiding of requiring specific fields within a name or address;
(c) parsing money/date/units of measure according to locale;
(d) allowing for native languages to be supported on non-native operating systems;
(e) converting non unicode encodings to unicode;
(f) verifying that locale-required fonts are available; and
(g) allowing for alternate input methods for alternate languages.

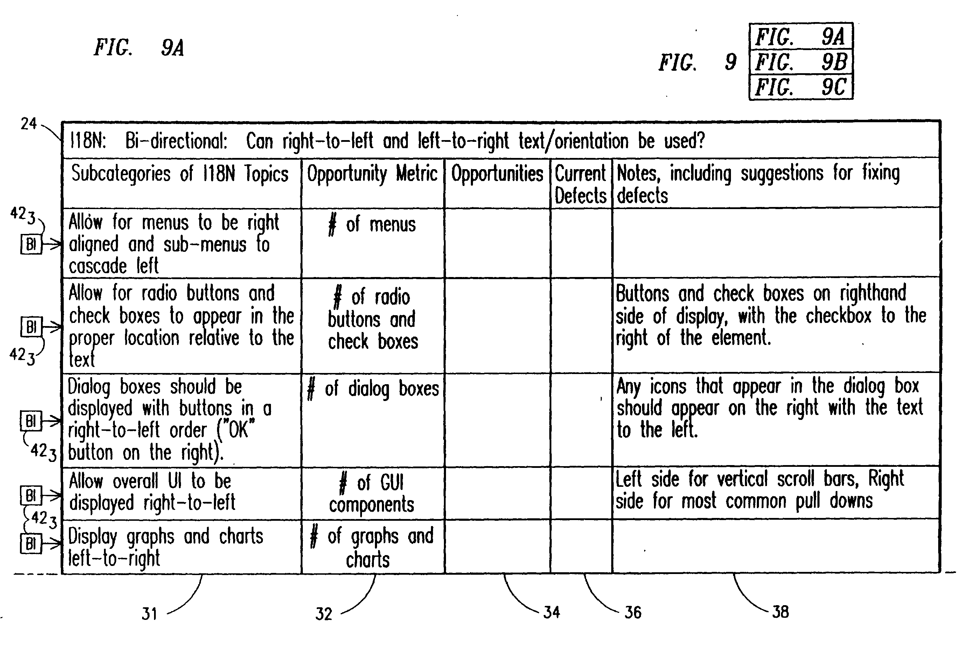

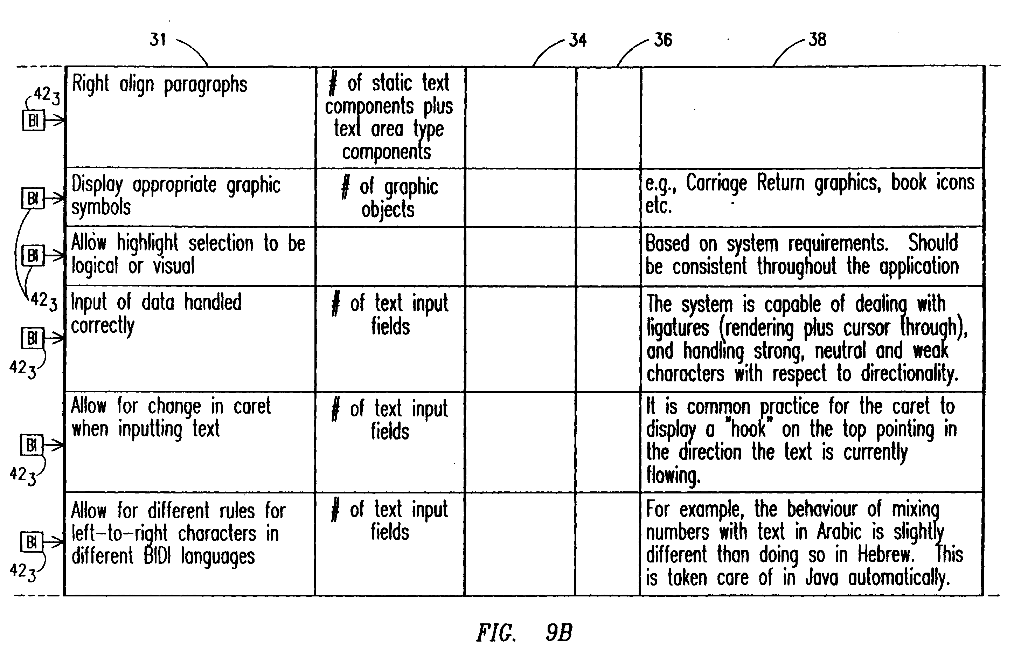

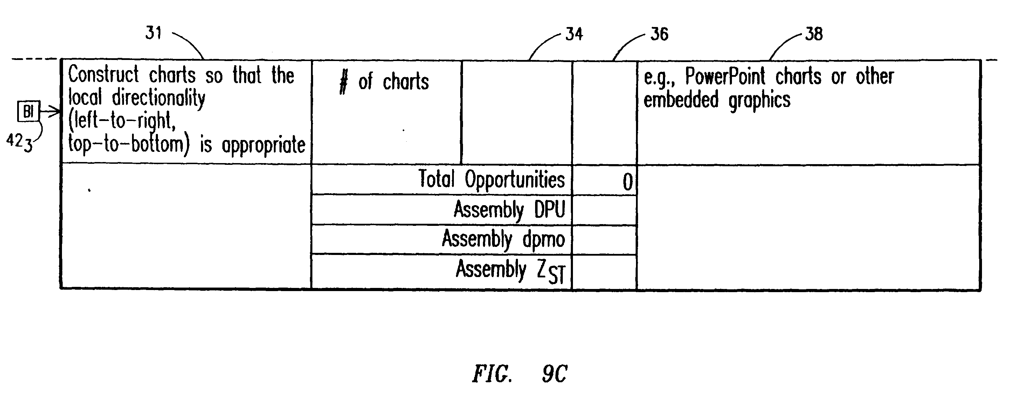

Fig. 9 illustrates a subordinate scorecard for checking compliance related to bi-directional display orientation in the software product. In this case, the list of I18N topics to be checked by the user include the following:
(a) allowing for menus to be right aligned and sub-menus to cascade left;
(b) allowing for radio buttons and check boxes to appear in the proper location relative to the text;
(c) ensuring dialog boxes are displayed with buttons in a right-to-left order ("OK" button on the right);
(d) allowing overall UI to be displayed right-to-left;
(e) displaying graphs and charts right-to-left;
(f) right aligning paragraphs;
(g) displaying appropriate graphic symbols;
(h) allowing highlight selection to be logical or visual;
(i) inputting of data handled correctly;
(j) allowing for change in caret when inputting text;
(k) allowing for different rules for left-to-right characters in different bi-directional (BIDI) languages; and
(l) constructing charts so that the local directionality (left-to-right, top-to-bottom) is appropriate.

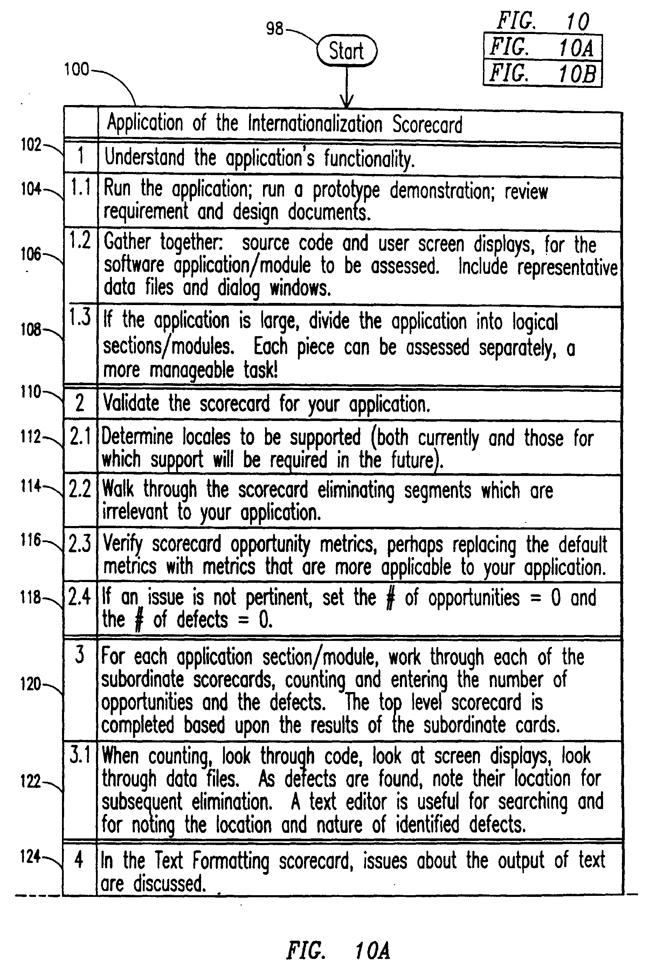

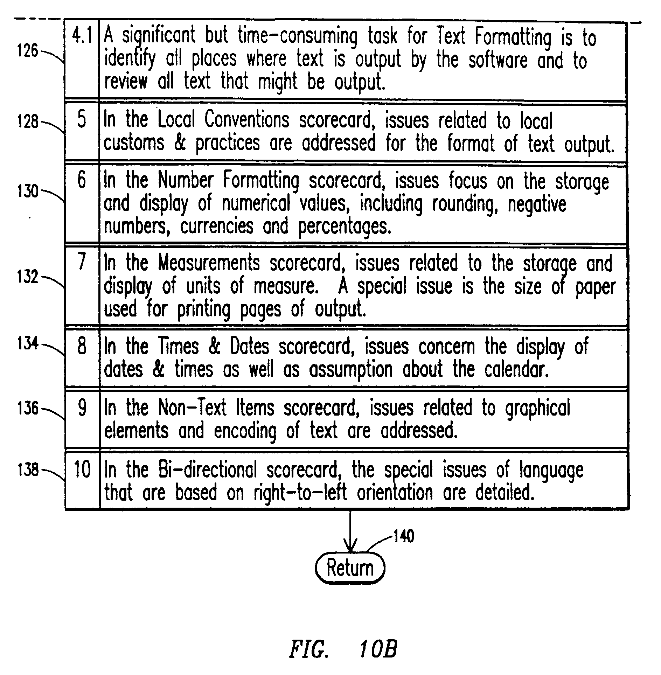

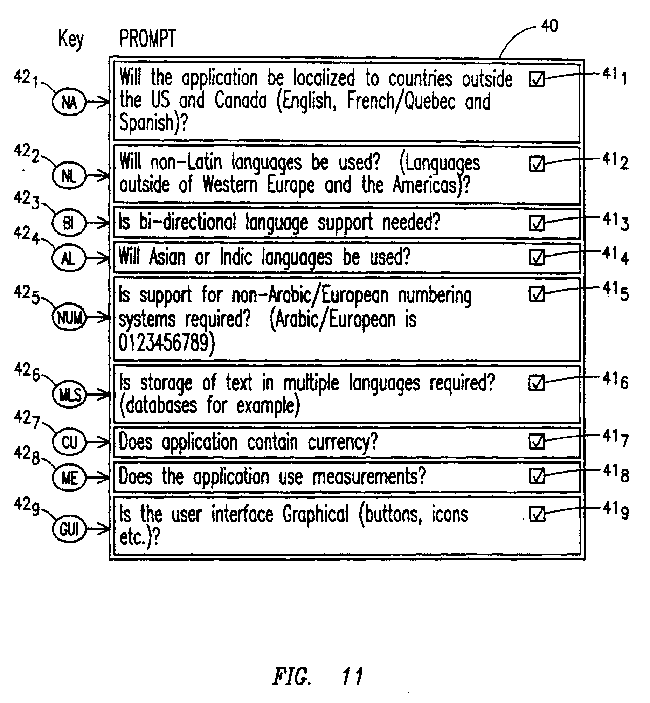

Fig. 10 shows an exemplary screen display of a guidance module 100 that contains help data for assisting or helping the user regarding the methodology of the present invention. Guidance module 100 is further configured so that each user can make substantially efficient use of the scorecard kit of the present invention without undergoing costly and time consuming training. It will be appreciated that guidance module 100 conveniently provides a flow chart or series of steps that allows the user to smoothly navigate through the I18N implementation when making use of the method and kit of the present invention. Subsequent to start of operations in step 100, steps 102 through 108 suggest to the user to have a thorough understanding of the functionality of the software application being evaluated. Step 106 suggests that the user should collect or gather the source code and all the screen displays of the software application being evaluated including representative data files and user interface windows. Step 108 suggests that if the application is relatively large in size, then the application should be divided into smaller sections or modules. Thus, instead of applying the teachings of the present invention to a single enormous application, the task may be more manageable to the user by applying the techniques of the present invention to such smaller section or modules. Steps 110 through 118 allow the user to validate the scorecard for a given software application. Step 112 allows for determining the respective locales reasonably expected to be supported by the software application. Step 114 suggests that the user has the flexibility to bypass I18N segments or categories that are not relevant to a given application. Further details in connection with a series of queries that may aid the user to bypass such segments or categories are discussed below in the context of Fig. 11. Step 116 suggests that the user has the flexibility to adapt the specific metrics used in a given application and need not be restricted to the default metrics listed in the scorecard. Step 118 suggests that if any specific I18N issue is not pertinent in a given application, then the user should set both the number of opportunities for a defect and the number of defects equal to zero.

As previously suggested, step 120 reminds the user that the master or top level scorecard is completed based on the respective results obtained in each of the subordinate scorecards. Step 122, reminds the user that when counting opportunities and/or defects the user should consider the source code, screen displays and data files. It will be appreciated that commercially available text editors suitable to the specific application may be used to aid the user to search and locate the precise location of any identified defects. Steps 124 and 126 identify that the text formatting scorecard may generally require thorough identification of the various locations or places where text is outputted by the software application as well as review of the outputted text itself. Step 128 suggests to the user to focus on issues related to local customs and practices for the format of text output by way of the local convention scorecard. Step 130 suggests to the user to focus on issues related to the storage and display of numerical values, including rounding, negative numbers, currencies and percentages. Step 130 is conveniently accomplished by way of the local conventions scorecard. Step 132 suggests to the user to focus on issues related to the storage and display of units of measurement. Another issue to be addressed is the size of paper used for printing pages of output. Step 132 is accomplished by way of the measurements scorecard. Step 134 suggests to the user to focus on issues related to the display of dates and times as well as assumptions about the calendar. Step 134 is accomplished by way of the times and dates scorecard. Step 136 suggests to the user to focus on issues related to graphical elements and encoding of text and is executed by way of the non-text items scorecard. Similarly, the text input scorecard addresses I18N issues pertaining to how text input from the user is handled. Prior to return step 140, step 138 suggests to the user to focus on the special issues related to languages that are based on right-to-left orientation and this step is executed with the bi-directional scorecard. As suggested above, when all subordinate scorecards have been completed for each of the applications sections and/or modules, the assessment is complete and the respective counts for the overall defect opportunities and actual defects are each automatically compiled and summarized in the master scorecard. Further, the respective statistical measurements that, for example, may indicate how many standard deviations a given count is from its mean may be readily determined as may be the locations of the I18N defects to be eliminated. As suggested above, the respective statistical measurements may be automatically compiled and summarized for display in the master scorecard.

Fig. 11 shows a display screen that displays a plurality of prompts or queries 40 having a respective data field 41₁-41₉ for selecting or deselecting by the user one or more characteristics of the software product identified to the user in each respective one of the prompts. For example, if data field 41₁ is electronically selected or checked by clicking a suitable input device, then the software product or application is designated by the user to be localized to countries outside the US and Canada. Conversely, if data field 41₁ is not checked then the application will not be localized to countries outside the US and Canada. The prompts may be particularly helpful to the user when conducting the assessment of the software product since, each prompt may be assigned a respective key, such as keys 42₁-42₉, that may allow the user to bypass one or more of the subcategories of I18N topics based on the particular characteristics of the specific software product being evaluated and its targeted language and country. For example, as shown in Fig. 5, if key 42₈, that is, the ME key that designates whether a product displays measurements or not, is activated by the user by clicking data field 41₈ (Fig. 11), then each subcategory dealing with I18N measurements will be conveniently bypassed, thus saving valuable time to the user while assessing the software product.

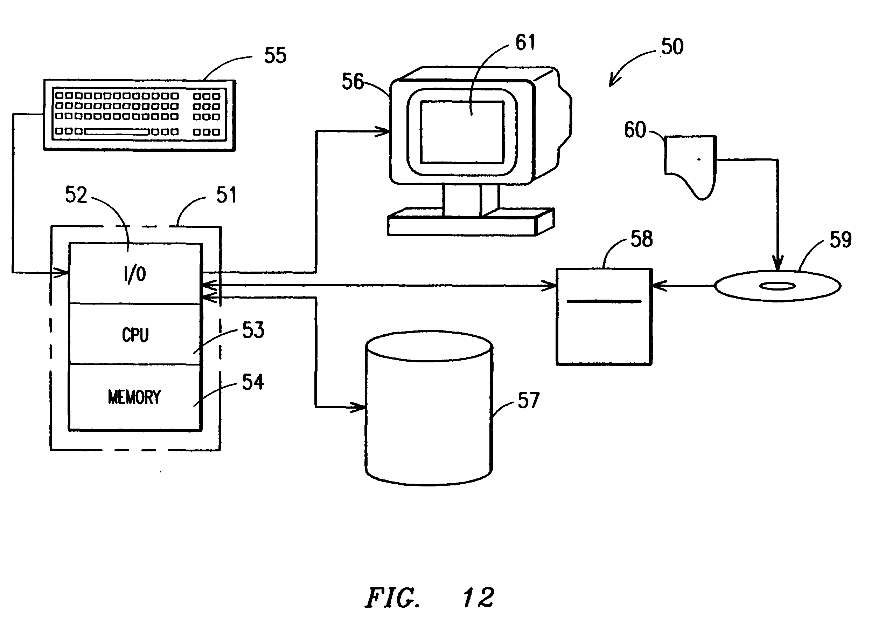

Fig. 12 shows an exemplary computer system 50 that can be conveniently used for executing the method of the present invention and/or for generating the kit of the present invention. Some of the components of computer system 50 are illustrated in Fig. 12, wherein a processor 51 has an input-output (I/O) unit 52, a central processing unit (CPU) 53 and a memory section 54. The I/O unit may be electrically coupled to a keyboard 55 or a computer mouse, not shown, that allows for the user inputting the respective data field selections described above in the context of Fig. 10. The I/O unit 52 may be further connected to a display unit 56, a disk storage unit 57 and a CD-ROM drive unit 58. The CD-ROM unit can read a suitable CD-ROM medium 59 that may contain a suitable software application 60, such as a Microsoft Excel spreadsheet, that as suggested above can be readily programmed to generate the master scorecard and the plurality of subordinate scorecards together with a computing module for computing the statistical parameters used for quantifying the I18N readiness of the software product being evaluated. As will be appreciated by those skilled in the art, the computation of the statistical parameter, such as the standard deviation or mean, is implemented through use of techniques well-understood in the art of statistics. An exemplary screen display 61 of the scorecard, better seen in Figs. 1-11, is shown on display unit 56.

For the sake of good order, various features of the invention are set out in the following clauses:
1. A method for assessing and improving internationalization readiness of a predetermined software product selected for evaluation by a user, the method comprising:
   generating an electronic master scorecard listing data indicative of respective main categories of internationalization topics to be considered by the user, the master scorecard including a first datafield configured for listing respective counts indicative of each opportunity that a defect may occur in the software product relative to each respective one of the listed main categories of internationalization topics, the aster scorecard including a second datafield configured for listing respective counts indicative of actual defects relative to each respective one of the listed main categories of internationalization topics; and
   computing, based on the respective counts listed on the first and second datafields of the master scorecard for each main category of internationalization topics, a predetermined statistical measurement indicative of the internationalization readiness of the software product relative to the main categories of internationalization topics listed in the master scorecard.
2. The method of clause 1 wherein the generating step comprises generating a plurality of subordinate scorecards each being respectively associated with a respective one of the main categories of internationalization topics listed in the master scorecard.
3. The method of clause 2 wherein each respective subordinate scorecard lists data indicative of respective subcategories of internationalization topics to be considered by the user.
4. The method of clause 3 wherein each respective subordinate scorecard further lists data indicative of suggested metrics for counting respective defect opportunities that may occur relative to each respective subcategory of topics.
5. The method of clause 4 wherein each respective subordinate scorecard has a first datafield configured for listing respective counts indicative of each opportunity that a defect may occur in the software product relative to the respective subcategories of internationalization topics.
6. The method of clause 5 wherein each respective subordinate scorecard has a second datafield configured for listing respective counts indicative of actual defects for the respective subcategories of topics.
7. The method of clause 6 wherein each respective subordinate scorecard lists respective suggestions for avoiding and/or removing defects relative to each respective subcategory topic.
8. The method of clause 7 wherein each respective subordinate scorecard further lists respective suggestions specific to a respective computer language used to develop the software product, and thereby allowing the user to avoid and/or remove defects relative to each respective subcategory topic.
9. The method of clause 6 wherein the computing step comprises computing, based on the respective counts stored in the first and second datafields of each respective subordinate scorecard, a predetermined statistical parameter indicative of the internationalization readiness of the software product relative to the subcategories of internationalization topics listed in each respective one of the subordinate scorecards.
10. The method of clause 9 wherein the predetermined statistical measurement indicative of the internationalization readiness of the software product relative to the main categories of internationalization topics listed in the master scorecard is based on a combination of the individual statistical indications for each of the subordinate scorecards.
11. The method of clause 1 further comprising a step for generating a plurality of prompts having a selectable datafield for selecting or deselecting by the user one or more characteristics of the software product identified to the user in a respective one of the prompts.
12. The method of clause 5 further comprising a step for generating a plurality of prompts having a selectable data field for selecting or deselecting by the user one or more characteristics of the software product identified to the user in a respective one of the prompts.
13. The method of clause 12 further comprising the step of bypassing one or more of the subordinate scorecards based on the respective characteristics selected by the user for the software product.
14. The method of clause 11 further comprising a guidance module that contains data for assisting the user regarding use of the master scorecard for assessing and improving the software product.
15. The method of clause 11 wherein the respective main categories of internationalization in the master scorecard are selected from the group consisting of alphanumeric formatting, display of measurements, times and dates, use of icon and/or graphics, entry of text, bi-directional orientation of text and displays, and local conventions for displaying data.
16. A computerized kit for assessing and improving internationalization readiness of a predetermined software product selected for evaluation by a user, the kit comprising:
   a processor module for generating an electronic master scorecard listing data indicative of respective main categories of internationalization topics to be considered by the user, the master scorecard including a first datafield configured for listing respective counts indicative of each opportunity that a defect may occur in the software product relative to each respective one of the listed main categories of internationalization topics, the master scorecard including a second datafield configured for listing respective counts indicative of actual defects relative to each respective one of the listed main categories of internationalization topics; and
   a computing module coupled to the processor module for computing, based on the respective counts listed on the first and second datafields of the master scorecard for each main category of internationalization topics, a predetermined statistical measurement indicative of the internationalization readiness of the software product relative to the main categories of internationalization topics listed in the master scorecard.
17. The kit of clause 16 wherein the processor module includes means for generating a plurality of subordinate scorecards each being respectively associated with a respective one of the main categories of internationalization topics listed in the master scorecard.
18. The kit of clause 17 wherein each respective subordinate scorecard lists data indicative of respective subcategories of internationalization topics to be considered by the user.
19. The kit of clause 18 wherein each respective subordinate scorecard further lists data indicative of suggested metrics for counting respective defect opportunities that may occur relative, to each respective subcategory of topics.
20. The kit of clause 19 wherein each respective subordinate scorecard has a first datafield configured for listing respective counts indicative of each opportunity that a defect may occur in the software product relative to the respective subcategories of internationalization topics.
21. The kit of clause 20 wherein each respective subordinate scorecard has a second datafield configured for listing respective counts indicative of actual defects for the respective subcategories of topics.
22. The kit of clause 21 wherein each respective subordinate scorecard lists respective suggestions for avoiding and/or removing defects relative to each respective subcategory topic.
23. The kit of clause 22 wherein each respective subordinate scorecard further lists respective suggestions specific to a respective computer language used to develop the software product, and thereby allowing the user for avoiding and/or removing defects relative to each respective subcategory topic.
24. The kit of clause 21 wherein the computing step comprises computing, based on the respective counts stored in the first and second datafields of each respective subordinate scorecard, a predetermined statistical parameter indicative of the internationalization readiness of the software product relative to the subcategories of internationalization topics listed in each respective one of the subordinate scorecards.
25. The kit of clause 24 wherein the predetermined statistical measurement indicative of the internationalization readiness of the software product relative to the main categories of internationalization topics listed in the master scorecard is based on a combination of the individual statistical indications for each of the subordinate scorecards.
26. The kit of clause 16 further comprising a prompt module for generating a plurality of prompts having a selectable datafield for selecting or deselecting by the user one or more characteristics of the software product identified to the user in a respective one of the prompts.
27. The kit of clause 20 further comprising a prompt module for generating a plurality of prompts having a selectable datafield for selecting or deselecting by the user one or more characteristics of the software product identified to the user in a respective one of the prompts.
28. The kit of clause 27 further comprising a module for bypassing one or more of the subordinate scorecards based on the respective characteristics selected by the user for the software product.
29. The kit of clause 26 further comprising a guidance module that contains data for assisting the user-regarding use of the master scorecard for assessing and improving the software product.
30. The kit of clause 26 wherein the respective main categories of internationalization in the master scorecard are selected from the group consisting of alphanumeric formatting, display of measurements, times and dates, use of icon and/or graphics, entry of text, bi-directional orientation of text and displays, and local conventions for displaying data.

## Claims

1. A method for assessing and improving internationalization readiness of a predetermined software product selected for evaluation by a user, the method comprising:
generating an electronic master scorecard listing data indicative of respective main categories of internationalization topics to be considered by the user, the master scorecard including a first datafield configured for listing respective counts indicative of each opportunity that a defect may occur in the software product relative to each respective one of the listed main categories of internationalization topics, the aster scorecard including a second datafield configured for listing respective counts indicative of actual defects relative to each respective one of the listed main categories of internationalization topics; and
computing, based on the respective counts listed on the first and second datafields of the master scorecard for each main category of internationalization topics, a predetermined statistical measurement indicative of the internationalization readiness of the software product relative to the main categories of internationalization topics listed in the master scorecard.

2. The method of claim 1 wherein the generating step comprises generating a plurality of subordinate scorecards each being respectively associated with a respective one of the main categories of internationalization topics listed in the master scorecard.

3. The method of claim 2 wherein each respective subordinate scorecard lists data indicative of respective subcategories of internationalization topics to be considered by the user.

4. The method of claim 3 wherein each respective subordinate scorecard further lists data indicative of suggested metrics for counting respective defect opportunities that may occur relative to each respective subcategory of topics.

5. The method of claim 4 wherein each respective subordinate scorecard has a first datafield configured for listing respective counts indicative of each opportunity that a defect may occur in the software product relative to the respective subcategories of internationalization topics.

6. A computerized kit for assessing and improving internationalization readiness of a predetermined software product selected for evaluation by a user, the kit comprising:
a processor module for generating an electronic master scorecard listing data indicative of respective main categories of internationalization topics to be considered by the user, the master scorecard including a first datafield configured for listing respective counts indicative of each opportunity that a defect may occur in the software product relative to each respective one of the listed main categories of internationalization topics, the master scorecard including a second datafield configured for listing respective counts indicative of actual defects relative to each respective one of the listed main categories of internationalization topics; and
a computing module coupled to the processor module for computing, based on the respective counts listed on the first and second datafields of the master scorecard for each main category of internationalization topics, a predetermined statistical measurement indicative of the internationalization readiness of the software product relative to the main categories of internationalization topics listed in the master scorecard.

7. The kit of claim 6 wherein the processor module includes means for generating a plurality of subordinate scorecards each being respectively associated with a respective one of the main categories of internationalization topics listed in the master scorecard.

8. The kit of claim 7 wherein each respective subordinate scorecard lists data indicative of respective subcategories of internationalization topics to be considered by the user.

9. The kit of claim 8 wherein each respective subordinate scorecard further lists data indicative of suggested metrics for counting respective defect opportunities that may occur relative, to each respective subcategory of topics.

10. The kit of claim 9 wherein each respective subordinate scorecard has a first datafield configured for listing respective counts indicative of each opportunity that a defect may occur in the software product relative to the respective subcategories of internationalization topics.
